# FASCICULE DE BREVET EUROPEEN

(11) **EP 2 542 798 B1**
(45) Date de publication et mention de la délivrance du brevet: **30.04.2014**
(21) Numéro de dépôt: 11706260.4
(22) Date de dépôt: 03.03.2011
(51) Int. Cl.: F16F 7/08, F16F 7/09

(54) **DISPOSITIF D'AMORTISSEMENT À FRICTION PILOTÉE**
GESTEUERTE REIBUNGSDÄMPFUNGSVORRICHTUNG
CONTROLLED FRICTION DAMPING DEVICE

(30) Priorité: 03.03.2010 FR 1051539
(43) Date de publication de la demande: 09.01.2013
(73) Titulaire: European Aeronautic Defence And Space Company Eads France, 75016 Paris (FR)
(72) Inventeur: PETITJEAN, Benoit, F-92370 Chaville (FR)
(74) Mandataire: Fourcade, Emmanuelle
(86) Numéro de dépôt international: PCT/EP2011/053199
(87) Numéro de publication internationale: WO 2011/107548

(56) Documents cités:
- EP-A1- 1 277 984
- WO-A2-01/73313

## Description

L'invention concerne un dispositif semi-actif d'amortissement utilisé pour amortir les vibrations en déplacement relatif de deux éléments entre lesquels est fixé ledit dispositif.

Un tel dispositif est utilisé par exemple dans le domaine aéronautique pour l'amortissement des vibrations des moteurs ou des réservoirs de lanceurs ou pour l'amortissement entre la structure porteuse d'un satellite d'observation et des équipements de visée.

L'art antérieur divulgue dans le document SEP 1 277 984, un amortisseur à friction pour l'amortissement des vibrations en mouvement relatif de translation entre deux pièces, Un tel amortisseur à friction se comporte comme une liaison rigide ou élastique pour des déplacements relatifs, entre les deux pièces, inférieurs à un seuil donné, puis dissipe une énergie proportionnelle au déplacement relatif entre ces deux pièces au-delà de ce seuil. Les caractéristiques d'amortissement d'un tel amortisseur sont donc fonctions de ce seuil. Selon cet exemple de l'art antérieur, ce seuil est fixé par le tarage de ressorts appliquant des patins de friction sur une surface de frottement, les déplacements relatifs des deux pièces tendant à provoquer le déplacement desdits patins sur ladite surface de frottement. Dans cette solution de l'art antérieur le seuil est fixé par le tarage de ressorts lors de l'assemblage de l'amortisseur. Pour modifier ultérieurement ce seuil, il est nécessaire de démonter ledit amortisseur, de procéder à un nouveau tarage ou au remplacement des ressorts, puis de réinstaller l'amortisseur. Or, il existe des situations où il est souhaitable d'adapter les conditions de dissipation d'énergie d'un tel amortisseur de sorte qu'il réponde de manière optimale en fonction de la nature des vibrations à amortir. Par exemple, la valeur optimale du seuil sera différente vis-à-vis de vibrations de faible amplitude, donc selon des fréquences plus élevées, et selon des vibrations à basse fréquence, d'amplitude plus élevée et finalement selon des conditions quasi-statiques. Dans d'autres circonstances il peut être souhaitable que la liaison réalisée par un tel amortisseur n'engendre aucune force ou une force négligeable compte tenu de l'application, c'est-à-dire que le seuil soit nul.

Le document US 6 378 671 divulgue un dispositif d'amortissement par friction dont l'effort normal de contact, définissant l'effort de glissement, peut être ajusté par le rétreint d'un fourreau sur un piston, ledit rétreint étant provoqué par l'application d'un champ magnétique au moyen d'une bobine portée par le piston. Ainsi la pression normale de serrage à l'interface de frottement est sensiblement proportionnelle à l'intensité du champ magnétique. Ce dispositif présente plusieurs inconvénients. Tout d'abord le principe structurel intrinsèque de ce dispositif de l'art antérieur, utilisant la déformation radiale, en rétreint, d'un fourreau fendu ne permet pas d'obtenir pour un champ magnétique donné une force normale constante sur toute la course axiale du piston, la rigidité des lames élastiques comprises entre les fentes du fourreau étant variable d'une extrémité à l'autre dudit fourreau. Ainsi, un champ magnétique de même intensité se traduira par une pression normale sur les éléments frottants plus importante à une extrémité du fourreau, côté extrémité libre des lames, qu'à l'autre extrémité. Ensuite, l'utilisation d'un dispositif magnétique limite les choix possibles des matériaux pouvant être utilisé. Ce dispositif de l'art antérieur ne peut ainsi pas être réalisé en alliage léger par exemple à base d'aluminium ou de titane, et est donc peu adapté à une utilisation aéronautique ou spatiale pour lesquelles les critères de masse sont prépondérants. Par ailleurs, ce dispositif peut difficilement être utilisé pour réaliser une liaison complète sous un seuil de glissement élevé, car il nécessite dans ce cas des puissances d'alimentation électriques importantes et éventuellement un refroidissement des bobines. Finalement l'utilisation d'une technologie basée sur la génération d'un champ magnétique n'est pas adaptée à une utilisation dudit dispositif dans des applications aéronautiques et spatiales ou des tels champs magnétiques sont sources de difficultés techniques sur les systèmes de commandes et de navigation.

L'invention vise à répondre aux insuffisances de l'art antérieur, en proposant un dispositif d'amortissement par friction dont les caractéristiques de dissipation d'énergie peuvent être ajustées en fonction des caractéristiques des vibrations à amortir, plus particulièrement adapté aux applications aéronautiques et spatiales, lequel dispositif comprend :
- un premier membre s'étendant axialement selon un axe longitudinal ;
- un second membre s'étendant axialement selon le même axe longitudinal, les deux membres étant guidés en translation l'un par rapport à l'autre ;
- un élément de frottement s'étendant entre les deux membres et les liant complètement l'un à l'autre par friction en translation axiale pour tout effort inférieur à un seuil 's' lequel effort tendant à créer un déplacement relatif des deux membres en translation selon ledit axe longitudinal ;
- un dispositif d'ajustement comprenant un actionneur piézoélectrique et permettant de régler la valeur dudit seuil ;
- des moyens, distants du premier et du second membre, aptes à piloter la pression de contact de l'élément de frottement sur la surface d'au moins un des membres, dans une plage comprenant une pression de contact nulle.

Ainsi le réglage du seuil de glissement de l'élément de frottement permet d'ajuster les conditions de liaison entre deux éléments liés par un tel dispositif, entre une liberté totale de translation d'un élément par rapport à l'autre et une liaison complète en translation des deux éléments ainsi liés, l'utilisation d'actionneurs piézoélectriques permet d'utiliser tout type de matériau pour la constitution du dispositif y compris des matériaux composites à matrice organique. Ce type d'actionneur peut être facilement piloté par des moyens électriques, lesquels peuvent être facilement asservis ou pilotés à grande distance par des moyens de radiocommunication, en outre, il présente l'avantage de pouvoir délivrer un effort variable à des fréquences élevées. Il permet ainsi de piloter l'adaptation du seuil de glissement en fonction de la nature des vibrations qui doivent être amorties par le dispositif objet de l'invention

Le dispositif objet de l'invention peut être mis en oeuvre selon les modes de réalisation particuliers, exposés ci-après, lesquels peuvent être considérés individuellement ou selon toute combinaison techniquement opérante.

Selon un mode de réalisation avantageux, les membres sont cylindriques, le second membre étant apte à coulisser dans le premier et comprenant une pluralité d'éléments de frottement s'étendant radialement et répartis sur la circonférence du second membre. Cette configuration permet de moduler le seuil de glissement dans une gamme plus étendue et de répartir les dissipations d'énergie, et ainsi l'échauffement et l'usure des surfaces en contact, tout en conservant la compacité du dispositif.

Selon un mode de réalisation particulier, les éléments de frottement sont constitués par la surface externe du second membre, la pression de contact étant modulée par l'expansion élastique radiale dudit second membre sur tout ou partie de sa longueur de contact avec le premier. Ainsi, le seuil de glissement est fonction uniquement de la pression normale à l'interface de glissement, laquelle est sensiblement la même quelle que soit la position axiale du second membre dans le premier

Avantageusement, le dispositif objet de l'invention comprend selon ce mode de réalisation une pluralité d'actionneurs piézoélectriques agissant chacun selon une direction radiale et réparti sur la circonférence du second membre. Ainsi il est possible d'obtenir une répartition uniforme de la pression de contact sur la circonférence même en présence de défauts de circularité des membres ou les défauts de concentricité des deux membres, lesdits défauts résultant soit de la fabrication du dispositif soit de sa déformation en cours de fonctionnement.

Le pilotage de l'effort normal, individualisé sur chaque actionneur piézoélectrique, permet également de compenser les effets de la dilatation thermique des membres et de l'usure sur la pression de contact des éléments de frottement.

L'invention concerne également un procédé pour le pilotage d'un dispositif correspondant à ce dernier mode de réalisation lequel procédé comprend une étape consistant à ajuster l'effort radial de contact entre le premier et second membre en activant les actionneurs piézoélectriques et à mesurer l'effort normal de contact avec les actionneurs piézoélectriques utilisés en tant que capteurs de force. Ce procédé utilise avantageusement la réversibilité de ces actionneurs pour ajuster de manière précise la pression de contact et éventuellement utiliser l'information issue des actionneurs utilisés comme capteurs pour tenir compte de l'usure ou de la déformation du dispositif dans l'ajustement de cette pression de contact.

Selon un mode de réalisation avantageux de ce procédé une partie des actionneurs est utilisée comme capteur simultanément à l'activation des autres actionneurs piézoélectriques.

Avantageusement, le même actionneur piézoélectrique est utilisé successivement comme capteur et comme actionneur.

Le dispositif objet de l'invention peut être avantageusement utilisé selon l'un quelconque de ses modes de réalisation dans un dispositif d'attache d'un réservoir de carburant dans le corps d'un comprenant un dispositif amortisseur comportant le dispositif objet de l'invention. Ainsi les caractéristiques d'amortissement dudit dispositif d'attache peuvent être ajustées selon les phases de vol ou selon les conditions de sollicitation dudit lanceur.

À cette fin, l'invention concerne également un procédé pour la commande d'un dispositif d'attache d'un réservoir selon l'invention lequel procédé comprend des étapes consistant à :
- régler la pression de contact entre les deux membres du dispositif amortisseur de sorte que le seuil 's' soit sensiblement égale à 0 ;
- régler la pression de contact entre les deux membres du dispositif amortisseur de sorte que le seuil 's' soit différent de 0 de sorte à amortir les vibrations du réservoir ;
- l'une ou l'autre de ces étapes étant sélectionnée selon les phases de vol du lanceur.

L'invention sera maintenant plus précisément décrite dans le cadre de modes de réalisation préférés, nullement limitatifs, représentés sur les figures 1 à 6 dans lesquelles :
- la figure 1 représente un modèle heuristique (1A) d'un dispositif d'amortissement par friction et son comportement (1B) en sollicitation simple et en sollicitation cyclique (1C) ;
- la figure 2 représente un modèle heuristique (2A) d'un dispositif d'amortissement avec pilotage du seuil de glissement et un exemple de comportement (2B) d'un tel dispositif ;
- la figure 3 illustre le principe d'un amortisseur à friction ;
- la figure 4, montre en vue de face et en coupe longitudinale un mode de réalisation avantageux d'un dispositif d'amortissement selon l'invention utilisant deux membres tubulaires aptes à coulisser l'un dans l'autre ;
- la figure 5 représente en vue de face (5A) et en vue de bout en coupe radiale (5B) un exemple de réalisation d'un mode de réalisation du dispositif d'amortissement selon l'invention utilisant une pluralité d'actionneurs radiaux ;
- et la figure 6 illustre, en coupe longitudinale, un exemple d'application du dispositif d'amortissement selon l'invention pour l'amortissement des vibrations d'un réservoir dans un lanceur.

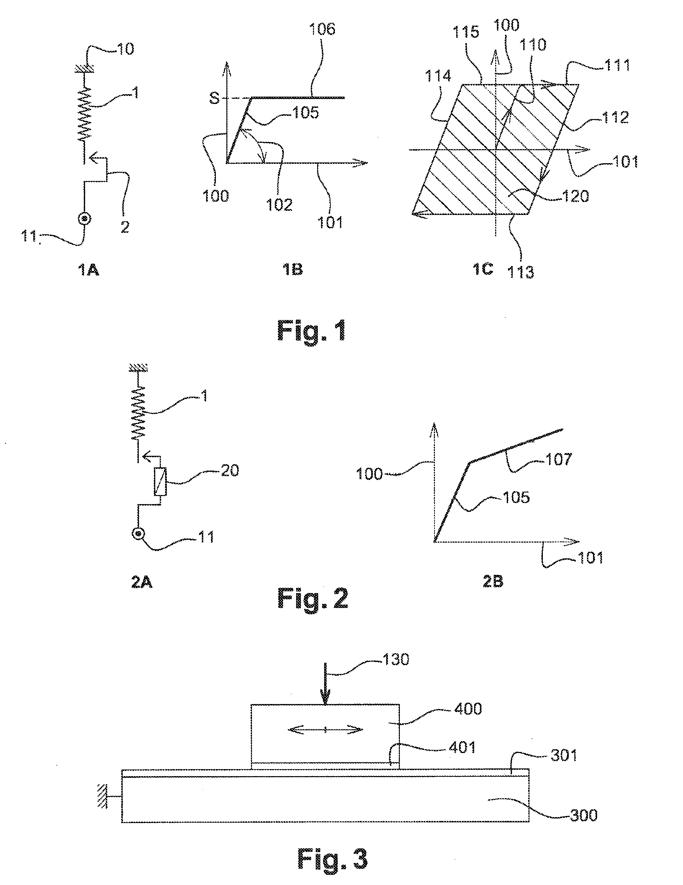

Figure 1A un modèle heuristique d'amortisseur à friction comprend un ressort (1) et un patin (2) en série. Le ressort (1) symbolise la composante élastique du comportement. L'une des extrémités (10) étant fixe, lorsque l'on applique à l'autre extrémité (11) une force ou un déplacement tendant à écarter les deux extrémités (10,11) l'une de l'autre, l'extrémité (11) se déplace d'abord sous une force de rappel proportionnelle à la raideur du ressort et au déplacement relatif des deux extrémités, le patin (2) restant collé et transmettant au ressort l'intégralité de la force et du déplacement appliqués à l'extrémité libre (11). Lorsque la valeur de la force de rappel atteint le seuil de glissement du patin (2), celui-ci glisse à effort constant, égal au seuil. La force transmise au ressort est égale à ce seuil quel que soit le déplacement relatif entre les deux extrémités.

Figure 1B, ce comportement, se traduit dans un diagramme force (100), déplacement (101) par une courbe en deux tronçons (105,106). Le premier tronçon (105) est une droite dont la pente (102) est égale à la raideur du ressort. Le second tronçon (106) est une droite parallèle à l'axe des déplacements (101) dont la prolongation coupe l'axe des forces (100) à une hauteur correspondant au seuil 's'.

Figure 1C, lorsque la sollicitation est cyclique, le déplacement initial s'effectue sous une force de rappel proportionnelle à la raideur du ressort (1), puis le patin glisse lorsque ladite force de rappel atteint le seuil 's'. En relâchant la sollicitation le ressort se détend selon une courbe (112) parallèle à celle (110) du premier chargement puis, se comprime, idéalement selon la même pente jusqu'à ce que le patin se remette à glisser pour un seuil de compression égal à - s. Le comportement est ensuite symétrique dans l'autre sens de sollicitation (114, 115). Ainsi, dans l'espace force (100) déplacement (101), le trajet représentant le comportement d'un tel amortisseur sollicité de manière périodique décrit un cycle d'hystérésis (112, 113, 114, 115, 111) sur une période de sollicitation. L'énergie dissipée par l'amortisseur au cours de cette période de sollicitation est proportionnelle à l'aire entourée par ledit cycle d'hystérésis.

Figure 2A, dans le cas un amortisseur à friction comprenant un patin (20) dont le seuil est réglable, la quantité d'énergie dissipée pour une sollicitation donnée dudit amortisseur peut être modulée en modulant le seuil de glissement 's' dudit patin. Selon le dispositif d'ajustement de ce seuil plusieurs lois de commande peuvent être utilisées.

Figure 2B, selon un exemple particulier de réalisation, le seuil 's' peut être ajusté proportionnellement au déplacement relatif des deux extrémités dans ce cas, le comportement correspondant au glissement du patin dans l'espace force - déplacement peut prendre la forme d'une courbe quelconque, par exemple une droite (107) non parallèle à l'axe des déplacements (101).

Figure 3 selon un exemple de principe de réalisation, le dispositif d'amortissement comprend un premier membre (300) fixe en contact avec un second membre (400) en déplacement relatif par rapport au premier membre. Les deux membres sont en contact par l'intermédiaire d'éléments de frottement (301, 401). Le seuil de glissement 's' est ajusté en agissant sur la pression normale de contact entre les deux membres, en ajustant la force normale (130) appliquée sur le membre (400) en déplacement relatif.

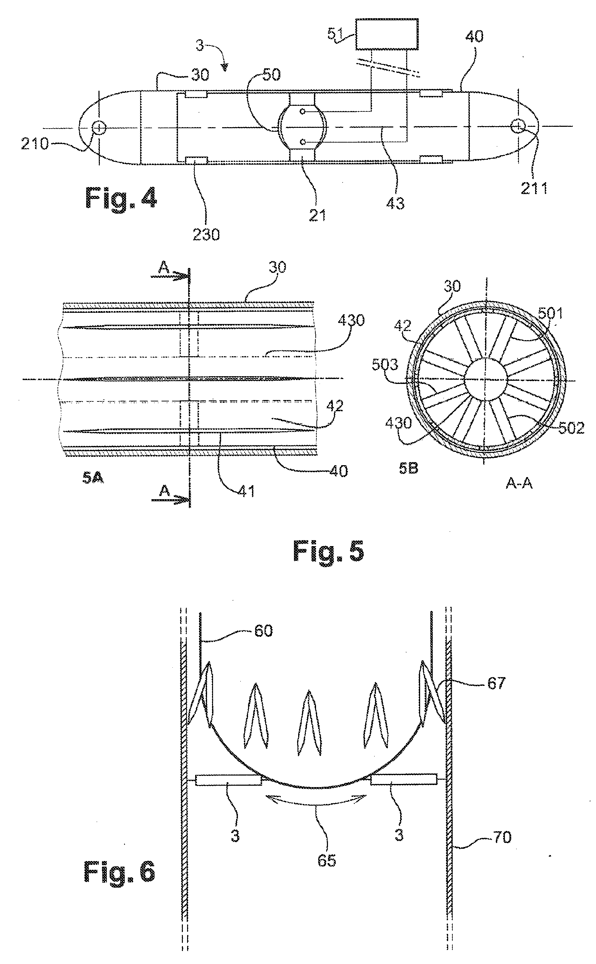

Figure 4, selon un mode de réalisation préféré de l'invention, le dispositif amortisseur comprend deux extrémités (210, 211) susceptibles de se déplacer axialement l'une par rapport à l'autre selon un axe longitudinal (43) du dispositif. Une première extrémité est prolongée par un membre mâle cylindrique (40) s'étendant selon l'axe longitudinal (43) et portant un ou plusieurs éléments de frottement (21). Ce membre vient se loger dans un fourreau (30) s'étendant axialement depuis l'autre extrémité. Des moyens de guidage en translation (230) permettent de guider le membre mâle (40) et le fourreau (30) l'un par rapport à l'autre. Lorsque le fourreau (30) et le membre mâle (40) sont assemblés, les éléments de frottement (21) sont en contact avec la paroi intérieure du fourreau, de sorte qu'un déplacement relatif entre les deux extrémités (210, 211) provoque un frottement desdits éléments sur la paroi intérieure du fourreau (30).

Un actionneur (50) permet de régler le seuil de glissement des éléments de frottement (21) sur la surface en agissant sur la pression normale de contact entre les éléments de frottements et la paroi intérieure du fourreau (30). L'actionneur est préférentiellement un actionneur piézoélectrique. Ce type d'actionneur comprend un ou plusieurs éléments piézoélectriques lesquels se déforment proportionnellement à l'intensité du champ électrique qui leur est appliqué. Si cette déformation est contrainte, l'élément piézoélectrique délivre une force très élevée compte tenu de sa grande raideur. Les actionneurs piézoélectriques sont réversibles et peuvent être utilisés comme capteurs. Dans ce cas ils, les éléments piézoélectriques se polarisent sous l'effet de la contrainte mécanique à laquelle ils sont soumis, polarisation qui peut être mesurée par la différence de potentiel entre les deux faces de l'élément piézoélectrique opposées selon l'axe de la contrainte.

Ainsi, il suffit de relier électriquement chaque actionneur piézoélectrique à un dispositif de commande (51) pour piloter celui-ci. Ledit dispositif de commande (51) peut ainsi être distant du dispositif amortisseur, et peut être lui-même piloté par des moyens informatiques ou par radio.

Figure 5A, selon une mode de réalisation avantageux, le membre mâle (40) est localement ajouré par des rainures (41) le séparant en secteurs angulaires (42) de sorte à faciliter sa déformation radiale tout en maintenant une raideur longitudinale importante.

Figure 5B, les actionneurs (501, 502, 503) de type piézoélectrique sont disposés radialement, fixés sur un noyau central (430) lié à l'extrémité (211) du membre mâle (40) qui s'étend axialement dans celui-ci. Ils agissent directement sur les parties ainsi ajourées. L'action des éléments piézoélectriques tend à l'expansion radiale de la partie ajourée ce qui a pour effet d'augmenter la pression normale de contact des secteurs angulaires (42) sur la paroi interne du fourreau (30).

Typiquement le débattement imposé par chaque actionneur radial est de l'ordre de 100 µm pour un effort normal maximum de l'ordre de 3 500 Newtons.

Figure 6, de tels amortisseurs sont par exemple utilisés pour amortir les vibrations d'un réservoir (60) dans un lanceur. Le réservoir (60) est suspendu dans le corps du lanceur (70) par une pluralité d'attaches structurales rigides (67). Des dispositifs d'amortissement selon l'invention (3) sont par exemple utilisés pour amortir le mouvement résiduel horizontal (65) dudit réservoir. Ces dispositifs amortisseurs peuvent alors être pilotés, soit par des moyens embarqués, soit par une liaison radio de sorte à adapter la raideur et l'amortissement desdites attaches en fonction des phases de vol.

Selon un exemple de réalisation, la force de friction est réglée de sorte qu'elle soit nulle pendant des phases de vol non critiques. Pendant les phases de vol critiques, les éléments de frottement sont mis en contact sous une pression normale apte à amortir les vibrations. La commutation peut être pilotée par le programme de vol ou par la mesure directe des accélérations locales.

Dans ce cas, la force normale sur les éléments de frottement peut être pilotée en fonction de l'amplitude des vibrations longitudinales.

La description ci-avant illustre clairement que par ses différentes caractéristiques et leurs avantages, la présente invention atteint les objectifs qu'elle s'était fixés. En particulier, elle permet d'ajuster le seuil de glissement des éléments de frottement dans un amortisseur à friction de sorte à ajuster l'amortissement aux conditions de fonctionnement.

## Revendications

1. Dispositif amortisseur (3) **caractérisé en ce qu'**il comprend :
- un premier membre (30) s'étendant axialement selon un axe longitudinal ;
- un second membre (40) s'étendant axialement selon le même axe longitudinal les deux membres étant guidés en translation l'un par rapport à l'autre ;
- un élément de frottement (21) s'étendant entre les deux membres et les liant complètement l'un à l'autre par friction en translation axiale pour tout effort inférieur à un seuil 's' lequel effort tendant à créer un déplacement relatif des deux membres en translation selon ledit axe longitudinal ;
- un dispositif d'ajustement (50) comprenant un actionneur piézoélectrique et permettant de régler la valeur dudit seuil ;
- des moyens (51), distants du premier (30) et du second (40) membre, aptes à piloter la pression de contact de l'élément de frottement (21,42) sur la surface d'au moins un des membres, dans une plage comprenant une pression de contact nulle.

2. Dispositif selon la revendication 1, **caractérisé en ce que** les membres (30,40) sont cylindriques, le second membre (40) étant apte à coulisser dans le premier (30) et comprenant une pluralité d'éléments de frottement (21,42) s'étendant radialement.

3. Dispositif selon la revendication 2, **caractérisé en ce que** les éléments de frottement (42) sont constitués par la surface externe du second membre (40), la pression de contact étant modulée par l'expansion élastique radiale dudit second membre (40) sur tout ou partie de sa longueur de contact avec le premier membre (30).

4. Dispositif selon la revendication 3, **caractérisé en ce qu'**il comprend une pluralité d'actionneurs piézoélectriques (501, 502, 503) agissant chacun selon une direction radiale et réparti sur la circonférence du second membre (40).

5. Procédé pour le pilotage d'un dispositif selon la revendication 4, **caractérisé en ce qu'**il comprend une étape consistant à ajuster l'effort radial de contact entre le premier (30) et second (40) membre en activant les actionneurs piézoélectriques (501, 502, 503) et à mesurer l'effort normal de contact avec les actionneurs piézoélectriques (501, 502, 503) utilisés en tant que capteurs de force.

6. Procédé selon la revendication 5, **caractérisé en ce qu'**une partie des actionneurs piézoélectriques est utilisée comme capteur simultanément à l'activation des autres actionneurs piézoélectriques.

7. Procédé selon la revendication 5, **caractérisé en ce que** le même actionneur piézoélectrique (501, 502, 503) est utilisé successivement comme capteur et comme actionneur.

8. Dispositif d'attache d'un réservoir de carburant (60) dans le corps d'un lanceur (70) **caractérisé en ce qu'**il comprend un dispositif amortisseur (3) selon l'une quelconque des revendications précédentes.

9. Procédé pour la commande d'un dispositif d'attache d'un réservoir selon la revendication 8, **caractérisé en ce qu'**il comprend des étapes consistant à :
- régler la pression de contact entre les deux membres (30, 40) du dispositif amortisseur (3) de sorte que le seuil 's' soit sensiblement égale à 0 ;
- régler la pression de contact entre les deux membres (30, 40) du dispositif amortisseur de sorte que le seuil 's' soit différent de 0 de sorte à amortir les vibrations du réservoir ;
- l'une ou l'autre de ces étapes étant sélectionnée selon les phases de vol du lanceur (70).

## Patentansprüche

1. Dämpfungsvorrichtung (3), **dadurch gekennzeichnet, dass** sie umfasst:
- ein erstes Glied (30), das sich axial gemäß einer Längsachse erstreckt;
- ein zweites Glied (40), das sich axial gemäß der gleichen Längsachse erstreckt, wobei die beiden Glieder gegeneinander verschiebbar geführt sind;
- ein Reibeelement (21), das sich zwischen den beiden Gliedern erstreckt und sie durch Reibung in axialer Translation für jede Kraft unterhalb einer Schwelle 's' vollständig miteinander verbindet, wobei die Kraft dazu neigt, eine relative Verschiebung der beiden Glieder in Translation gemäß der Längsachse zu erzeugen;
- eine Anpassungsvorrichtung (50), die einen piezoelektrischen Aktuator umfasst und es ermöglicht, den Schwellenwert einzustellen;
- Mittel (51), die vom ersten (30) und zweiten (40) Glied beabstandet sind, die befähigt sind, den Kontaktdruck des Reibeelements (21, 42) auf der Oberfläche mindestens eines der Glieder in einem Bereich zu steuern, der einen Kontaktdruck null umfasst.

2. Vorrichtung nach Anspruch 1, **dadurch gekennzeichnet, dass** die Glieder (30, 40) zylindrisch sind, wobei das zweite Glied (40) befähigt ist, in dem ersten (30) zu gleiten, und eine Vielzahl von Reibeelementen (21, 42) umfasst, die sich radial erstrecken.

3. Vorrichtung nach Anspruch 2, **dadurch gekennzeichnet, dass** die Reibeelemente (42) durch die äußere Oberfläche des zweiten Glieds (40) gebildet werden, wobei der Kontaktdruck durch die radiale elastische Ausdehnung des zweiten Glieds (40) auf seiner gesamten oder einem Teil seiner Kontaktlänge mit dem ersten Glied (30) moduliert wird.

4. Vorrichtung nach Anspruch 3, **dadurch gekennzeichnet, dass** sie eine Vielzahl von piezoelektrischen Aktuatoren (501, 502, 503) umfasst, die jeweils gemäß einer radialen Richtung wirken und auf dem Umfang des zweiten Glieds (40) verteilt sind.

5. Verfahren zur Steuerung einer Vorrichtung nach Anspruch 4, **dadurch gekennzeichnet, dass** es einen Schritt umfasst, der darin besteht, die radiale Kontaktkraft zwischen dem ersten (30) und dem zweiten (40) Glied anzupassen, indem die piezoelektrischen Aktuatoren (501, 502, 503) aktiviert werden und indem die normale Kontaktkraft mit den piezoelektrischen Aktuatoren (501, 502, 503) gemessen wird, die als Kraftaufnehmer verwendet werden.

6. Verfahren nach Anspruch 5, **dadurch gekennzeichnet, dass** ein Teil der piezoelektrischen Aktuatoren als Aufnehmer verwendet werden und gleichzeitig andere piezoelektrische Aktuatoren aktiviert werden.

7. Verfahren nach Anspruch 5, **dadurch gekennzeichnet, dass** der gleiche piezoelektrische Aktuator (501, 502, 503) nacheinander als Aufnehmer und als Aktuator verwendet wird.

8. Vorrichtung zur Befestigung eines Treibstofftanks (60) in dem Körper eines Trägersystems (70), **dadurch gekennzeichnet, dass** sie eine Dämpfungsvorrichtung (3) nach einem der vorhergehenden Ansprüche umfasst.

9. Verfahren zur Steuerung einer Vorrichtung zur Befestigung eines Tanks nach Anspruch 8, **dadurch gekennzeichnet, dass** es die folgenden Schritte umfasst:
- Einstellen des Kontaktdrucks zwischen den beiden Gliedern (30, 40) der Dämpfungsvorrichtung (3), so dass die Schwelle 's' im Wesentlichen gleich 0 ist;
- Einstellen des Kontaktdrucks zwischen den beiden Gliedern (30, 40) der Dämpfungsvorrichtung, so dass die Schwelle 's' verschieden von 0 ist, um die Vibrationen des Tanks zu dämpfen;
- wobei einer dieser Schritte in Abhängigkeit von den Flugphasen des Trägersystems (70) ausgewählt wird.

## Claims

1. Damping device (3) **characterized in that** it comprises:
- a first member (30) extending axially along a longitudinal axis;
- a second member (40) extending axially along the same longitudinal axis, the two members being guided translationally relative to one another;
- a friction element (21) extending between the two members and connecting them completely to one another by friction in axial translation for any force below a threshold "s", said force tending to create a relative translational movement of the two members along said longitudinal axis;
- an adjustment device (50) comprising a piezoelectric actuator and enabling the value of said threshold to be adjusted;
- means (51), remote from the first (30) and the second (40) member, able to control the contact pressure of the friction element (21, 42) on the surface of at least one of the members, in a range comprising a zero contact pressure.

2. Device according to Claim 1, **characterized in that** the members (30, 40) are cylindrical, the second member (40) being able to slide in the first (30) and comprising a plurality of friction elements (21, 42) extending radially.

3. Device according to Claim 2, **characterized in that** the friction elements (42) are constituted by the external surface of the second member (40), the contact pressure being modulated by the elastic radial expansion of said second member (40) over all or part of its contact length with the first member (30).

4. Device according to Claim 3, **characterized in that** it comprises a plurality of piezoelectric actuators (501, 502, 503) each acting in a radial direction and distributed over the circumference of the second member (40).

5. Method for controlling a device according to Claim 4, **characterized in that** it comprises a step consisting in adjusting the radial contact force between the first (30) and second (40) members by activating the piezoelectric actuators (501, 502, 503) and in measuring the normal contact force with the piezoelectric actuators (501, 502, 503) used as force sensors.

6. Method according to Claim 5, **characterized in that** some of the piezoelectric actuators are used as sensors simultaneously to the activation of the other piezoelectric actuators.

7. Method according to Claim 5, **characterized in that** the same piezoelectric actuator (501, 502, 503) is used successively as sensor and as actuator.

8. Device for attaching a fuel tank (60) in the body of a launcher (70), **characterized in that** it comprises a damping device (3) according to any one of the preceding claims.

9. Method for controlling a device for attaching a tank according to Claim 8, **characterized in that** it comprises steps consisting in:
- adjusting the contact pressure between the two members (30, 40) of the damping device (3) such that the threshold "s" is approximately equal to 0;
- adjusting the contact pressure between the two members (30, 40) of the damping device such that the threshold "s" is different from 0 so as to damp the vibrations of the tank;
- one or other of these steps being selected according to the flight phases of the launcher (70).
